# NEUE EUROPÄISCHE PATENTSCHRIFT

(11) **EP 2 347 227 B2**
(45) Veröffentlichungstag und Bekanntmachung des Hinweises auf die Entscheidung über den Einspruch: **27.02.2019**
(45) Hinweis auf die Patenterteilung: 06.05.2015
(21) Anmeldenummer: 09748045.3
(22) Anmeldetag: 31.10.2009
(51) Int. Cl.: G01G 21/28, G01G 21/30

(54) **VERFAHREN ZUM ABDICHTEN EINER WÄGEZELLE**
METHOD FOR SEALING A WEIGHING CELL
PROCÉDÉ POUR ÉTANCHÉIFIER UNE CELLULE DE PESAGE

(30) Priorität: 08.11.2008 DE 102008056515
(43) Veröffentlichungstag der Anmeldung: 27.07.2011
(73) Patentinhaber: Sartorius Lab Instruments GmbH & Co. KG, 37075 Göttingen (DE)
(72) Erfinder: HEINE, August, 37434 Bodensee (DE); LAUBSTEIN, Michael, 37077 Göttingen (DE)
(74) Vertreter: Schneider, Peter Christian
(86) Internationale Anmeldenummer: PCT/EP2009/007810
(87) Internationale Veröffentlichungsnummer: WO 2010/051947

(56) Entgegenhaltungen:
- WO-A1-01/90708
- WO-A1-90/04153
- WO-A1-2004/046667
- WO-A1-2006/030171
- WO-A1-2006/113065
- CH-A- 409 439
- DE-A1- 10 025 712
- DE-A1-102006 012 841
- DE-U1- 8 508 424

## Beschreibung

### Gebiet der Erfindung

Die Erfindung betrifft ein Verfahren zum Abdichten einer Wägezelle mit einem in einem Gehäuse angeordneten Wägesystem, einem außerhalb des Gehäuses angeordneten Lastaufnehmer, der über eine Aufnehmerachse mit dem Wägesystem verbunden ist, und mit einer Abdichtung durch die der Durchlass des Gehäuses für die Aufnehmerachse während und/oder nach einem Reinigungsvorgang gegen den Eintritt von Flüssigkeit und/oder Schmutz abgedichtet wird, wobei die Abdichtung aus einem dem Gehäuse zugewandten rückwärtigen Dichtrand des Lastaufnehmers besteht, mit dem sie bei geschlossener Abdichtung gegen eine Anschlagfläche des Gehäuses dichtend angedrückt wird.

### Stand der Technik

Derartige Verfahren zur Abdichtung von Wägezellen sind bekannt aus der DE 10 2006 012 841 A1 sowie der WO 2006/030171 A1.

Für Wägezellen in der Pharmaindustrie wird zunehmend eine Reinigbarkeit bzw. Desinfektion oder Sterilisation mit heißen Flüssigkeiten und eine Trocknung mit warmer bis heißer Luft verlangt.

Es sind verschiedene technische Lösungen zur Abdichtung der Aufnehmerachse gegenüber dem Gehäuse bei der Reinigung bekannt, um das Eindringen des Reingungsmediums zu verhindern. So ist beispielsweise aus der EP 1 302 757 B1 eine Abdichtung in Form einer Labyrinthdichtung bekannt, die eine Einrichtung mit einer reifenförmigen Ausgestaltung aufweist, die mittels Druckänderungen eines zugeführten Fluids aufgeweitet und wieder verkleinert werden kann. Damit ist es möglich, während des Reinigungsvorganges bei arretiertem Lastaufnehmer das Labyrinth vollständig zu schließen.

Nachteilig bei der bekannten Abdichtung ist jedoch, dass sie einerseits relativ kompliziert aufgebaut ist und dass sie andererseits nicht verhindern kann, dass durch Anhaftung von Reinigungsflüssigkeit nach erfolgter Reinigung und Öffnung der Abdichtung Restflüssigkeit in das Gehäuse eindringen kann.

In der JP 02-213 730 AA wird ein elektromagnetisches kraftkompensierendes Wägesystem beschrieben, welches sich in einem mit Schutzgas gefüllten Gehäuse befindet, wobei der Innendruck des Gehäuses geringfügig höher ist als der atmosphärische Druck. Dies wird erreicht, indem der Durchlass für die Kraftübertragung in das Gehäuse mittels einer Faltenbalgdichtung abgedichtet wird. Durch die waagerechte Anordnung dieser Faltenbalgdichtung wird verhindert, dass die Höhe des Überdruckes im Gehäuse einen Einfluss auf das Wägeergebnis hat. Nachteilig an dieser Lösung ist der Umstand, dass Faltenbalgdichtung eine permanente Verbindung zwischen Wägesystem und Gehäuse und somit einen Kraftnebenschluss darstellt. Dieses ist insbesondere bei niederlastigen Waagen mit höherer Auflösung von Nachteil. Der Kraftnebenschluss äußert sich durch Hysterese und Kriechen.

Aus der WO 90/04153 A1 ist eine Waage mit einem in einem Gehäuse angeordneten Wägesystem bekannt. Außerhalb des Gehäuses ist ein Lastaufnehmer angeordnet, der über eine Aufnehmerachse mit dem Wägesystem verbunden ist. Die Aufnehmerachse weist dabei im Gehäuseinnenraum eine mechanische "Teil-" Dichtung auf, die einen dauerhaft geöffneten Spalt gegenüber der benachbarten Gehäusewandung bildet. Dieser Spalt soll sicherstellen, dass nur geringe Mengen Luftfeuchtigkeit in das Gehäuse eindringen können, die dann von einem Vorrat an Trocknungsmittel absorbiert werden sollen.

Nachteilig auch bei dieser Waage ist, dass eine vollständige Abdichtung eben gerade nicht erreicht wird, dass bei einer Reinigung bzw. Desinfektion oder Sterilisation mit heißen Flüssigkeiten, diese in den Gehäuseinnenraum eindringen können und den Vorrat an Trocknungsmittel schnell aufbrauchen. Bei einer anschließenden Trocknung mit warmer bis heißer Luft von außen kann zudem die nächste Wägung erst nach einer gewissen Abkühlungszeit vorgenommen werden.
Aus der WO 2004/046667 A1 ist eine Wägezelle 1 bekannt, deren Wägesystem mit einem Lastaufnehmer verbunden ist. Ein Durchlass des Gehäuses ist dabei dauerhaft geöffnet. Zur Vermeidung einer Staubablagerung zwischen dem feststehenden Gehäuse und dem vertikal beweglichen Kraftübertragungsglied ist eine mit einer Gaszufuhr versehene Vorrichtung zur Staubentfernung vorgesehen.

Nachteilig dabei ist, dass ein außerhalb des Gehäuses vorgesehener ringförmiger Gasaustritt, der zudem gegenüber dem Gehäuseinnenraum gedichtet bzw. abgeschlossen ist, relativ aufwendig und kompliziert ausgebildet ist.

Aus der CH 409 439 A ist eine Wägevorrichtung mit Zeigerinstrument für die Gewichtsanzeige bekannt, dessen Zeiger über ein Gestänge mit dem zur Aufnahme der zu wiegenden Last bestimmten Teil in Arbeitsverbindung steht, wobei auf dem Gestänge angeordnete Scheiben als Dichtungsorgane zwischen dem Instrument und dem wägenden Teil vorgesehen sind, um im Instrumentengehäuse zur Verhinderung des Zutritts von feuchter Raumluft einen Überdruck zu erzeugen.

Derartige Waagen sind beispielsweise zur Montage in einer Metzgerei, Molkerei oder in einem anderen Feuchtigkeit enthaltenden Raum bestimmt. Derartige Waagen sind jedoch keine Präzisionswaagen wie sie als Wägezellen in der Pharmaindustrie in Verbindung mit automatisierten Anlagen Verwendung finden, wobei eine Reinigbarkeit bzw. Desinfektion oder Sterilisation mit heißen Flüssigkeiten und eine Trocknung mit warmer bis heißer Luft verlangt wird.
Aus der WO 01/90708 A ist eine elektronische Waage für den Einsatz in explosionsgefährdeter Umgebung bekannt, die als eine unterschalige Waage ausgebildet ist. Unterschalige Waagen haben jedoch den Nachteil, dass sie für einen Bandbetrieb nicht geeignet sind. Um die für den Sonderfall des Explosionsschutzes notwendige Kapselung des Gehäuseinnenraumes herzustellen, wird in diesem Sonderfall ein Gasstrom in das Gehäuseinnere eingeleitet, der einen Gehäuseüberdruck erzeugt, um einen Explosionsschutz zu erzielen. Das krafteinleitende Gestänge wird dabei über einen Adapterflansch durch eine Bohrung im Gehäuseboden geführt. Über eine seitliche Öffnung im Adapterflansch wird das Gestänge durch den Adapterflansch hindurchgeführt, wobei auch Gas über die seitliche Öffnung austreten kann. Würde man die unterschalige Waage um 180° drehen, um daraus eine oberschalige Waage zu erhalten, die in einer Bandeinlage eingesetzt werden könnte, so würde bei einem Reinigungsprozess Flüssigkeit in die Bohrung eintreten.

Aus der WO 2006/113065 A ist es schließlich bekannt, ein oder mehrere Wägezellen mit unterschalig angeordneten Aufnahmebehältern für Füllgut in einer geschlossenen Kammer, die einen Gaseinlass und einen Gasauslass aufweist, anzuordnen.

### Aufgabenstellung

Die Aufgabe der vorliegenden Erfindung ist es daher, ein gattungsgemäßes Verfähren derart weiterzubilden, dass sich damit ein Eindringen von Restflüssigkeit eines Reinigungsvorgangs in das Gehäuse vermeiden und das Messsystem nach erfolgter Reinigung kühlen lässt.

### Darlegung der Erfindung

Die Aufgabe wird in Verbindung mit dem Oberbegriff des Anspruches 1 dadurch gelöst, dass zur Erzeugung eines Überdruckes in das Gehäuse ein gekühltes Gas über einen Lufteinlass geleitet wird, und dass das Gas nach dem Öffnen der Abdichtung zumindest teilweise aus dem Gehäuse über den Durchlass des Gehäuses für die Aufnehmerachse des Lastaufnehmers abgeleitet wird.

Durch den im Gehäuse herrschenden Überdruck wird nach dem Öffnen der Abdichtung relativ einfach und zuverlässig verhindert, dass Restflüssigkeit oder Staub in das Gehäuse eindringen können. Das Gas kann dabei auch aus einer Druckluftleitung zugeführt werden, die mit einer externen Druckerzeugungsvorrichtung verbunden ist.

Es ist sogar möglich, während des Messvorganges den Überdruck im Gehäuse aufrecht zu erhalten. Notwendig ist dabei lediglich eine gleichmäßige Regelung des Druckes, bei der ggf. Korrekturwerte berücksichtigt werden können.

Der Fachmann war bisher bestrebt, auch die Wägezellen, die in insbesondere zur Verwendung in automatisierten Anlagen vorgesehen sind, in ihrem Wägesystem frei von Luftströmungen zu halten. Der Fachmann war dieser Vorstellung so verhaftet, dass er beispielsweise zur Kühlung lediglich versucht hat, die Wägezellen mittelbar über Kühlkörper von außen zu kühlen (siehe EP 1 925 922 A1 und EP 1 396 711 B1).

Gemäß einer bevorzugten Ausführungsform der Erfindung wird als Gas zur Erzeugung eines Überdruckes Luft genutzt, die beispielsweise über einen Filter gefiltert wird.

Nach einer weiteren bevorzugten Ausführungsform der Erfindung ist in dem Gehäuse zur Drucküberwachung ein Drucksensor angeordnet, der mit einer Regel- und Steuereinheit der Druckerzeugungsvorrichtung zur Steuerung des Druckes in Verbindung steht.

Gemäß einer weiteren bevorzugten Ausführungsform der Erfindung ist im Lufteinlass und/oder im Luftauslass ein regelbares Ventil vorgesehen, das von der Regel- und Steuereinheit gesteuert wird.

Gemäß einer weiteren bevorzugten Ausführungsform der Erfindung ist der Luftauslass als ein Überdruckventil ausgebildet. Dadurch wird sichergestellt, dass ein die Wägezelle schädigender Überdruck nicht erreicht werden kann.

Der Volumenstrom des durch das Gehäuse geleiteten Gases ist ebenfalls über die Regel- und Steuereinheit regelbar.

Der Austritt von Gas aus dem Gehäuse erfolgt zumindest teilweise über den Durchlass des Gehäuses für die Aufnehmerachse des Lastaufnehmers.

Nach einer weiteren bevorzugten Ausführungsform der Erfindung ist ein erster Temperatursensor zur Überwachung der Ablufttemperatur dem Luftauslass benachbart angeordnet. Ein zweiter Sensor kann dabei zur Überwachung der Temperatur des Wägesystems mit thermischem Kontakt am Wägesystem angeordnet sein. Weiterhin ist die Regel- und Steuereinheit mit Mitteln zum Temperieren des Gases verbunden. Dadurch ist es möglich, nach erfolgter Reinigung mit heißer Reinigungsflüssigkeit und nachfolgender Trocknung einen neuen Messvorgang in kürzerer Zeit durchzuführen.

Mit demselben Gas kann damit zuverlässig das Eindringen von unerwünschten Substanzen verhindert und gleichzeitig eine schnelle Abkühlung erreicht werden.

Nach dem Öffnen der Abdichtung wird das Gas zumindest teilweise aus dem Gehäuse über den Durchlass des Gehäuses für die Aufnehmerachse des Lastaufnehmers abgeleitet. Dadurch wird insbesondere nach dem Öffnen der Abdichtung, also nach erfolgter Reinigung, das Eindringen von Restflüssigkeit in das Gehäuse zuverlässig verhindert.

Überraschenderweise hat sich gezeigt, dass das Einleiten von Gas zur Erzielung eines geringen Überdrucks im Gehäuse der Wägezelle bzw. des Wägesystems keinen nachteiligen Einfluss auf die Messergebnisse zeigt. Das Eindringen von unerwünschten Substanzen nach erfolgter Reinigung wird dabei zuverlässig vermieden.

Es ist sogar möglich, während des Messvorganges einen leichten Überdruck im Gehäuse aufrecht zu erhalten. Notwendig ist dann allerdings eine gleichmäßige Regelung des Druckes, bei der Korrekturwerte ggf. im Messergebnis berücksichtigt werden können.

Der Fachmann war, wie bereits geschildert, bisher bestrebt, auch die Wägezellen, die insbesondere zur Verwendung von automatisierten Anlagen vorgesehen sind, in ihrem Wägesystem frei von Luftströmungen zu halten. Der Fachmann war dieser Vorstellung so verhaftet, dass er z.B. bei notwendiger Kühlung lediglich versucht hat, die Wägezellen mittelbar über Kühlkörper von außen zu kühlen.

Gemäß einer bevorzugten Ausführungsform der Erfindung erfolgt bei geschlossener Abdichtung die Druckbeaufschlagung des Gehäuses über den Lufteinlass, wobei ein zusätzlich vorhandener Luftauslass geschlossen ist.

Gemäß einer weiteren bevorzugten Ausführungsform der Erfindung wird zur Erzeugung des Überdrucks der Strömungswiderstand am Lufteinlass kleiner eingestellt als der Strömungswiderstand am Luftauslass und/oder am Gehäusedurchlass.

Gemäß einer bevorzugten Ausführungsform der Erfindung wird der Druck im Gehäuse von der Steuer- und Regeleinrichtung in Abhängigkeit von dem Signal des Drucksensors gesteuert.

Nach einer weiteren bevorzugten Ausführungsform der Erfindung wird der Überdruck im Gehäuse während der Wägung auf einen vorgegebenen niedrigen Wert geregelt. Durch die Regelung auf einen vorgegebenen Wert können ggf. Korrekturwerte berücksichtigt werden. Dabei kann auch während der Wägung das Eindringen von unerwünschten Substanzen zuverlässig verhindert.

Erfindungsgemäß wird das verwendete Gas temperiert, nämlich gekühlt. Ggf. zusätzlich kann das Gas auch gefiltert und/oder mit einer vorgegebenen Feuchtigkeit vorgehalten werden. Damit kann das verwendete Gas gleichzeitig zur Temperierung bzw. Kühlung des Messsystems nach erfolgter Reinigung genutzt werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibung der Zeichnungen

In den Zeichnungen zeigen:

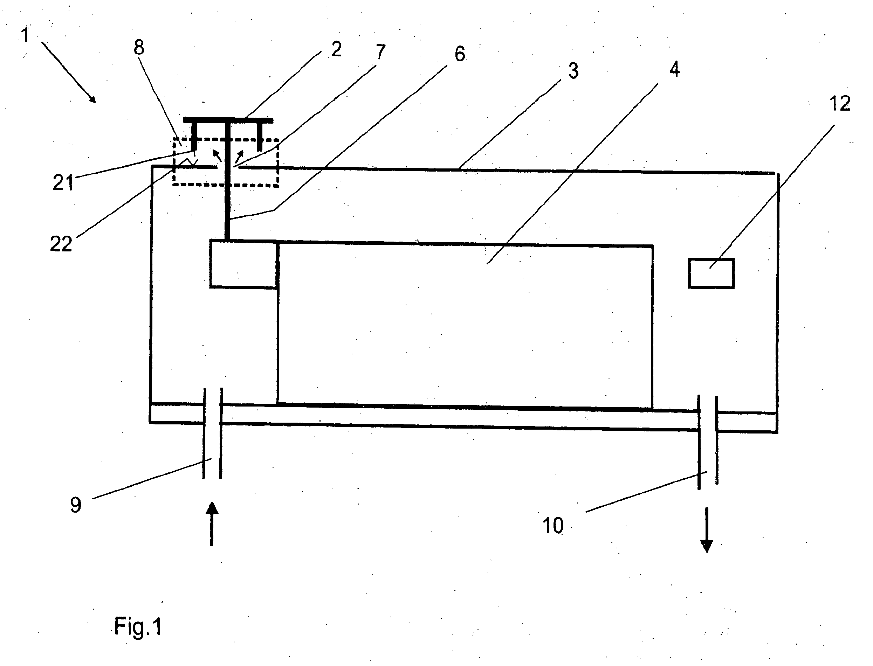

- Figur 1:: eine schematische Seitenansicht einer Wägezelle,

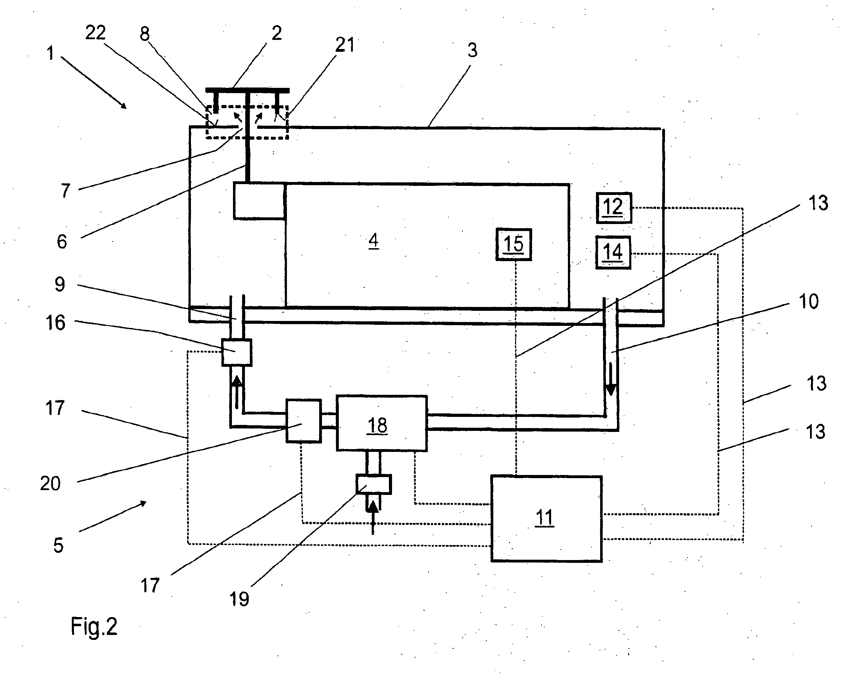

- Figur 2:: eine schematische Seitenansicht einer Wägezelle mit einer Regel- und Steuereinheit und
- Figur 3:: die Wägezelle von Figur 1 mit geschlossener Abdichtung im Ausriss.

### Ausführliche Beschreibung bevorzugter Ausführungsformen

Die Wägezelle 1 besteht im Wesentlichen aus einem Lastaufnehmer 2, einem Gehäuse 3, einem Wägesystem 4 und einer Druckerzeugungsvorrichtung 5.

Der außerhalb des Gehäuses 3 angeordnete Lastaufnehmer 2 ist über eine Aufnehmerachse 6 mit dem in dem Gehäuse 3 angeordneten Wägesystem 4 verbunden. Das Gehäuse 3 weist einen Durchlass 7 auf, durch den die Aufnehmerachse 6 das Gehäuse 3 durchdringt und der durch eine Abdichtung 8 während eines Reinigungsprozesses abdichtbar ist.

Das Gehäuse 3 weist in einem ersten Bereich einen Lufteinlass 9 und in einem zweiten Endbereich einen Luftauslass 10 auf. Über den Lufteinlass 9 ist ein Gas, im Ausführungsbeispiel Luft, von der Druckerzeugungsvorrichtung 5 in das Gehäuse 3 hinein- und über den Luftauslass 10 herausführbar.

Die Druckerzeugungsvorrichtung 5 weist eine Regel- und Steuereinheit 11 auf. Im Gehäuse 3 ist ein Drucksensor 12 angeordnet, der über eine Signalleitung 13 mit der Regel- und Steuereinheit 11 verbunden ist. Ein erster Temperatursensor 14 ist dem Luftauslass 10 im Gehäuse 3 benachbart angeordnet. Ein zweiter Temperatursensor 15 ist mit thermischem Kontakt am Wägesystem 4 angeordnet. Über weitere Signalleitungen 13 sind die Temperatursensoren 14, 15 mit der Regel- und Steuereinheit 11 verbunden. Dem Lufteinlass 9 ist ein regelbares Ventil 16 vorgelagert, das über eine Steuerleitung 17 mit der Regel- und Steuereinheit 11 verbunden ist.

Zur Erzeugung eines Überdruckes in dem Gehäuse 3 wird in Abhängigkeit von dem an dem Drucksensor 12 gemessenen Druck Gas bzw. im Ausführungsbeispiel Luft über den Lufteinlass 9 und dem Luftauslass 10 geleitet. Zur Erzeugung des Überdrucks wird über das regelbare Ventil 16 von der Regel- und Steuereinheit 11 der Strömungswiderstand am Lufteinlass 9 kleiner eingestellt als der Strömungswiderstand am Luftauslass 10 und/oder am Durchlass 7 des Gehäuses 3. Nach dem Öffnen der Abdichtung 8 wird das Gas bzw. die Luft zumindest teilweise aus dem Gehäuse 3 über den Durchlass 7 des Gehäuses 3 für die Aufnehmerachse 6 des Lastaufnehmers 2 abgeleitet.

Der Druck im Gehäuse 3 wird von der Regel- und Steuereinheit 11 in Abhängigkeit von dem Signal des Drucksensors 12 gesteuert. Dabei wird der Druck bzw. Überdruck im Gehäuse 3 während der Wägung auf einen vorgegebenen Wert geregelt.

Die Druckerzeugungsvorrichtung 5 weist weiterhin ein Mittel 18 zum Temperieren des Gases auf, das beispielsweise als Wärmetauscher oder als Peltier-Element ausgebildet sein kann. Die Druckerzeugungsvorrichtung 5 weist zudem einen Filter 19 auf, über den angesaugte Luft gefiltert wird. Dem regelbaren Ventil 16 ist ein Ventilator 20 vorgelagert, über den die Luft angesaugt und gefördert werden kann. Der Ventilator 20 ist ebenfalls über eine Steuerleitung 17 mit der Regel- und Steuereinheit 11 verbunden.

Das durch das Gehäuse 3 geleitete Gas kann in Abhängigkeit von dem Signal des ersten Temperatursensors 14 und des zweiten Temperatursensors 15 temperiert, d.h. meist gekühlt, werden. Der Temperiervorgang wird durch die Regel- und Steuereinheit 11 gesteuert.

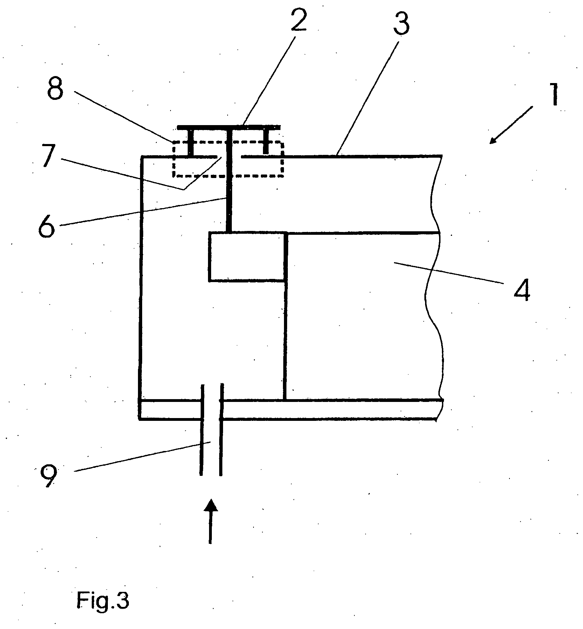

Die Abdichtung 8 besteht im Wesentlichen aus einem dem Gehäuse 3 zugewandten rückwärtigen Dichtrand 21, der bei geschlossener Abdichtung (siehe Fig. 3), also in einer Spülstellung, gegen eine Anschlagfläche 22 des Gehäuses 3 dichtend angedrückt wird.

### Bezugszeichenliste

- 1: Wägezelle
- 2: Lastaufnehmer
- 3: Gehäuse
- 4: Wägesystem
- 5: Druckerzeugungsvorrichtung
- 6: Aufnehmerachse
- 7: Durchlass
- 8: Abdichtung
- 9: Lufteinlass
- 10: Luftauslass
- 11: Regel- und Steuereinheit
- 12: Drucksensor
- 13: Signalleitung
- 14: erster Temperatursensor
- 15: zweiter Temperatursensor
- 16: regelbares Ventil
- 17: Steuerleitung
- 18: Mittel zum Temperieren
- 19: Filter
- 20: Ventilator
- 21: rückwärtiger Dichtrand
- 22: Anschlagfläche

## Patentansprüche

1. Verfahren zum Abdichten einer Wägezelle (1) mit einem in einem Gehäuse (3) angeordneten Wägesystem (4), einem außerhalb des Gehäuses (3) angeordneten Lastaufnehmer (2), der über eine Aufnehmerachse (6) mit dem Wägesystem (4) verbunden ist, und mit einer Abdichtung (8) durch die der Durchlass (7) des Gehäuses (3) für die Aufnehmerachse (6) während und/oder nach einem Reinigungsvorgang gegen den Eintritt von Flüssigkeit und/oder Schmutz abgedichtet wird,
wobei die Abdichtung (8) aus einem dem Gehäuse (3) zugewandten rückwärtigen Dichtrand (21) des Lastaufnehmers (2) besteht, mit dem sie bei geschlossener Abdichtung (8) gegen eine Anschlagfläche (22) des Gehäuses (3) dichtend angedrückt wird,
**dadurch gekennzeichnet,**
**dass** zur Erzeugung eines Überdruckes in das Gehäuse (3) ein gekühltes Gas über einen Lufteinlass (9) geleitet wird, und
**dass** das Gas nach dem Öffnen der Abdichtung (8) zumindest teilweise aus dem Gehäuse (3) über den Durchlass (7) des Gehäuses (3) für die Aufnehmerachse (6) des Lastaufnehmers (2) abgeleitet wird.

2. Verfahren nach Anspruch 1,
**dadurch gekennzeichnet,**
**dass** bei geschlossener Abdichtung die Druckbeaufschlagung des Gehäuses (3) über den Lufteinlass (9) erfolgt, wobei ein zusätzlich vorhandener Luftauslass (10) geschlossen ist.

3. Verfahren nach Anspruch 1,
**dadurch gekennzeichnet,**
**dass** zur Erzeugung des Überdrucks der Strömungswiderstand am Lufteinlass (9) kleiner eingestellt wird als der Strömungswiderstand am Luftauslass (10) und/oder am Gehäusedurchlass (7).

4. Verfahren nach einem der Ansprüche 1 bis 3,
**dadurch gekennzeichnet,**
**dass** der Druck im Gehäuse (3) von einer Regel- und Steuereinheit (11) in Abhängigkeit von dem Signal des Drucksensors (12) gesteuert wird.

5. Verfahren nach einem der Ansprüche 1 bis 4,
**dadurch gekennzeichnet,**
**dass** das verwendete Gas gefiltert und/oder mit einer vorgegebenen Feuchtigkeit vorgehalten wird.

## Claims

1. Method of sealing a weighing cell (1) with a weighing system (4) arranged in a housing (3), a load pick-up (2), which is arranged outside the housing (3) and which is connected with the weighing system (4) by way of a pick-up axle (6), and a seal (8) by which the passage (7) of the housing (3) for the pick-up axle (6) is sealed during and/or after a cleaning process against the entry of liquid and/or dirt,
wherein the seal (8) consists of a rearward sealing edge (21), which faces the housing (3), of the load pick-up (2) and by which the seal (8) when closed is sealingly pressed against an abutment surface (22) of the housing (3),
**characterised in that** for producing an excess pressure in the housing (3) a cooled gas is conducted by way of an air inlet (9) and that the gas after opening of the seal (8) is conducted at least in part out of the housing (3) by way of the passage (7) of the housing (3) for the pick-up axle (6) of the load pick-up (2).

2. Method according to claim 1, **characterised in that** when the seal is closed the pressure loading of the housing (3) takes place by way of the air inlet (9), wherein an additionally present air outlet (10) is closed.

3. Method according to claim 1, **characterised in that** for producing the excess pressure the flow resistance at the air inlet (9) is set to be lower than the flow resistance at the air outlet (10) and/or at the housing passage (7).

4. Method according to any one of claims 1 to 3, **characterised in that** the pressure in the housing (3) is controlled by a regulating and control unit (11) in dependence on the signal of the pressure sensor (12).

5. Method according to any one of claims 1 to 4, **characterised in that** the gas that is used is filtered and/or is kept with a predetermined moisture.

## Revendications

1. Procédé d'étanchement d'une cellule de pesage (1) comprenant un système de pesage (4) disposé dans un boîtier (3), un récepteur de charge (2) disposé à l'extérieur du boîtier (3) et relié par un axe de récepteur (6) au système de pesage (4), et une garniture d'étanchéité (8) à l'aide de laquelle le passage (7) du boîtier (3) destiné à l'axe de récepteur (6) est rendu étanche pendant et/ou après une opération de nettoyage contre l'entrée de liquide et/ou de souillures,
la garniture d'étanchéité (8) comprenant un bord d'étanchéité arrière (21), faisant face au boîtier (3), du récepteur de charge (2), bord d'étanchéité avec lequel la garniture d'étanchéité est pressée de manière étanche contre une surface de butée (22) du boîtier (3) lorsque la garniture d'étanchéité (8) est serrée,
**caractérisé en ce que**
un gaz refroidi est acheminé dans le boîtier (3) par une entrée d'air (9) pour générer une surpression, et **en ce que**
le gaz est dérivé, après le desserrage de la garniture d'étanchéité (8), au moins partiellement du boîtier (3) par le biais du passage (7) du boîtier (3) destiné à l'axe de récepteur (6) du récepteur de charge (2).

2. Procédé selon la revendication 1,
**caractérisé en ce que**,
lorsque la garniture d'étanchéité est serrée, la mise sous pression du boîtier (3) est effectuée par le biais de l'entrée d'air (9), une sortie d'air supplémentaire (10) étant fermée.

3. Procédé selon la revendication 1,
**caractérisé en ce que**,
pour générer la surpression, la résistance à l'écoulement à l'entrée d'air (9) est réglée pour être inférieure à la résistance à l'écoulement à la sortie d'air (10) et/ou au niveau du passage de boîtier (7).

4. Procédé selon l'une des revendications 1 à 3, **caractérisé en ce que**
la pression dans le boîtier (3) est commandée par une unité de régulation et de commande (11) en fonction du signal du capteur de pression (12).

5. Procédé selon l'une des revendications 1 à 4,
**caractérisé en ce que**
le gaz utilisé est filtré et/ou maintenu à une humidité prédéterminée.
